(19) Europäisches Patentamt
European Patent Office
Office européen des brevets

(11) **EP 2 510 392 B1**

(12) **FASCICULE DE BREVET EUROPEEN**

(45) Date de publication et mention
de la délivrance du brevet:
**12.08.2015 Bulletin 2015/33**

(51) Int Cl.:
**G02B 6/293** *(2006.01)*  **G02B 5/18** *(2006.01)*
**H01S 3/00** *(2006.01)*

(21) Numéro de dépôt: **10801624.7**

(22) Date de dépôt: **03.12.2010**

(86) Numéro de dépôt international:
**PCT/FR2010/052604**

(87) Numéro de publication internationale:
**WO 2011/070274 (16.06.2011 Gazette 2011/24)**

(54) **DISPOSITIF POUR LA COMPENSATION DE LA DISPERSION TEMPORELLE APPLIQUEE A LA GENERATION D'IMPULSIONS LUMINEUSES ULTRA BREVES**

VORRICHTUNG ZUR KOMPENSATION VON ZEITLICHER DISPERSION ANGEWENDET ZUR ERZEUGUNG VON ULTRAKURZEN LICHTIMPULSEN

DEVICE FOR COMPENSATING TEMPORARAL DISPERSION APPLIED TO ULTRA-SHORT LIGHT PULSE GENERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2009 FR 0958840**

(43) Date de publication de la demande:
**17.10.2012 Bulletin 2012/42**

(73) Titulaire: **Fastlite**
**75013 Paris (FR)**

(72) Inventeurs:
• **KAPLAN, Daniel**
**F-75006 Paris (FR)**
• **TOURNOIS, Pierre**
**F-06800 Cagnes S/Mer (FR)**

(74) Mandataire: **Mazabraud, Xavier**
**Cabinet Moutard**
**35, rue de la Paroisse**
**78000 Versailles (FR)**

(56) Documents cités:
**EP-A1- 1 372 002      US-A1- 2003 007 201**
**US-A1- 2006 274 391**

• **P. TOURNOIS: LES COMPTES RENDUS DE L'ACADEMIE DES SCIENCES, vol. 269B, 15 septembre 1969 (1969-09-15), pages 455-458, XP008156930, cité dans la demande**

• **TOURNOIS P: "NEW DIFFRACTION GRATING PAIR WITH VERY LINEAR DISPERSION FOR LASER PULSE COMPRESSION", ELECTRONICS LETTERS, IEE STEVENAGE, GB, vol. 29, no. 16, 5 août 1993 (1993-08-05), XP002028716, ISSN: 0013-5194**

• **KANE S ET AL: "GRATING COMPENSATION OF THIRD-ORDER MATERIAL DISPERSION IN THE NORMAL DISPERSION REGIME: SUB-100-FS CHIRPED-PULSE AMPLIFICATION USING A FIBER STRETCHER AND GRATING-PAIR COMPRESSOR", IEEE JOURNAL OF QUANTUM ELECTRONICS, IEEE SERVICE CENTER, PISCATAWAY, NJ, USA LNKD- DOI: 10.1109/3.469287, vol. 31, no. 11, 1 novembre 1995 (1995-11-01), pages 2052-2057, XP000541548, ISSN: 0018-9197**

• **J.O. WHITE ET AL.: "Response of grating pairs to single-cycle electromagnetic pulses", J. OPT. SOC. AM. B, vol. 12, no. 09, 30 septembre 1995 (1995-09-30), pages 1687-1694, XP002601936,**

• **BARDEN S C ET AL: "VOLUME-PHASE HOLOGRAPHIC GRATINGS AND THE EFFICIENCY OF THREE SIMPLE VOLUME-PHASE HOLOGRAPHIC GRATINGS", PUBLICATIONS OF THE ASTRONOMICAL SOCIETY OF THE PACIFIC, SAN FRANCISCO, US, vol. 112, no. 772, 1 juin 2000 (2000-06-01), pages 809-820, XP009049547, cité dans la demande**

- Y. ZAOUTER ET AL.: "Third-order spectral phase compensation in parabolic pulse compression", OPTICS EXPRESS, vol. 15, no. 15, 23 juillet 2007 (2007-07-23), pages 9372-9377, XP002601937,

**Description**

La présente invention concerne un dispositif pour la compensation de la dispersion temporelle appliquée à la génération d'impulsions lumineuses ultra brèves.

Ce dispositif s'applique notamment aux systèmes de génération d'impulsions lumineuses ultra brèves nécessitant la compensation de la dispersion temporelle des fréquences optiques introduite par les divers composants de la chaîne.

D'une façon générale, on sait que les systèmes de génération d'impulsions lumineuses ultra brèves de durées inférieures ou égales à 10 fs doivent transmettre des bandes de fréquences optiques de l'ordre de 100 THz, soit exprimées en longueurs d'ondes optiques, de l'ordre de 200 nm autour de la longueur d'onde centrale de 800 nm. La difficulté la plus importante rencontrée dans de tels systèmes est la compensation de la dispersion temporelle des fréquences optiques dans les systèmes optiques.

La dispersion dans les systèmes optiques s'exprime par la variation de la phase optique $\varphi$ en fonction de la pulsation optique : $\omega = 2\pi\nu$, au moyen du développement de Taylor suivant :

$$\varphi\,(\omega) = \varphi_0 + \varphi_1\,(\omega - \omega_0) + \varphi_2\,(\omega - \omega_0)^2/\,2\,! + \varphi_3\,(\omega - \omega_0)^3/\,3\,! + \ldots$$

$\nu$ étant la fréquence optique prise autour d'une fréquence centrale $\nu_0$ de pulsation $\omega_0$.

Le temps de retard de groupe est alors donné par :

$$t_g\,(\omega) = t_0 + \varphi_2\,(\omega - \omega_0) + \varphi_3\,(\omega - \omega_0)^2/\,2\,! + \varphi_4\,(\omega - \omega_0)^3/\,3\,! + \ldots$$

La dispersion positive du 2$^{ième}$ ordre introduite par les matériaux (variation du temps de retard de groupe avec la fréquence optique) peut être compensée par la dispersion négative du 2$^{ième}$ ordre introduite par des dispositifs dits compresseurs, réalisés par exemple par une combinaison de deux réseaux parallèles telle que décrite par E.B. Treacy, "Optical Pulse Compression with Diffraction Gratings" IEEE J. Quantum Electron. 5,9,454-458, Sept. 1969. Cependant, un tel dispositif compresseur introduit en général une dispersion du troisième ordre positive, qui dans le système de Treacy se rajoute à la dispersion des matériaux. Ces dispositifs ne sont donc adéquats que lorsque la bande spectrale est suffisamment faible pour que l'effet des termes du 3$^{ième}$ ordre et des ordres supérieurs puisse être considéré comme négligeable. Dans le cas contraire, on peut envisager l'utilisation des systèmes de contrôle de phase spectrale programmables, capables de traiter tous les ordres de dispersion et utilisant par exemple des matrices de cristaux liquides (Cf : A.M. Weiner, "Femtosecond pulse shaping using spatial light modulators", Rev. Sci ; Instrum., 71,5,1929-1960, May 2000), ou une diffraction acousto-optique (Cf : P. Tournois, "Acousto-optic programmable dispersive filter for adaptative compensation of group delay time dispersion in laser systems" Optics Communications 140,245-249,1997).

Une autre solution consiste à réaliser un dispositif non programmable permettant d'obtenir une dispersion du 2$^{ième}$ ordre sans dispersion du 3$^{ième}$ ordre, ou avec une dispersion du 3$^{ième}$ ordre ajustable en signe permettant de compenser les dispersions de systèmes optiques divers. Un système de ce type a été proposé dès 1968 (Cf : P. Tournois, "Sur un interféromètre de phase à variation linéaire du temps de retard en fonction de la fréquence" C.R.Acad.Sc.Paris,269,455-458,Sept.1969). Il utilise une configuration de paire de GRISMS, c'est-à-dire de dispositifs hybrides intégrant un prisme et un réseau en transmission rapporté sur ce prisme. Ce type de système a été peu utilisé dans sa forme originale en raison de la limitation de rendement en puissance optique, liée à l'efficacité de la diffraction des réseaux en transmission dans la configuration utilisée, qui est fortement contrainte par la nécessité d'intégrer réseau et prisme en un seul élément.

Des améliorations ont été apportées depuis par l'utilisation de réseaux par réflexion (Cf : E.A. Gibson et al. "Efficient reflection grisms for pulse compression and dispersion compensation of femtosecond pulsés" Optics Letters,31,22,3363-3365,Nov.2006 ; Cf : F. Travella et al. "Dispersion management for sub-10 fs, 10 TW optical parametric chirped-pulse amplifier" Optics Letters,32,15,2227-2229,August 2007 ; Cf : J. Zheng, H. Zacharias, "Design considérations for a compact grism stretcher for non-collinear optical parametric chirped-pulse amplification" Appl.Phys.B).

Néanmoins, leur utilisation entraîne une configuration optique compliquée et les angles de diffraction restent encorne éloignés de la condition de Littrow qui assure un très bon rendement de diffraction. Par ailleurs, leur bande spectrale d'utilisation est peut-être limitée par des considérations de géométrie des faisceaux optiques.

L'invention a pour objet un dispositif pour la compensation de la dispersion temporelle appliquée à la génération d'impulsions lumineuses ultra brèves; elle propose, à cet effet, l'utilisation de deux réseaux de diffraction optiques identiques et parallèles et de deux prismes identiques placés à l'intérieur des réseaux, sachant que les réseaux sont des réseaux de phase en volume fonctionnant en transmission sur le principe de la diffraction de Bragg, les faces extérieures des prismes étant parallèles aux réseaux et les faces intérieures des prismes étant parallèles entre elles.

Ainsi, le dispositif selon l'invention est basé sur des combinaisons de réseaux en transmission et de prismes non nécessairement intégrés ; ceci permet une plus grande flexibilité dans le choix des paramètres pour viser les performances optimales en termes de bande spectrale et de rendement de diffraction.

Par ailleurs, ces réseaux sont des réseaux holographiques de phase en volume (Cf : S. Barden et al. "Volume-Phase Holographie Gratings and the Efficiency of Three Simple Volume-Phase Holographic Gratings" PASP,112,809-820,June 2000) ou des réseaux de fentes usinés dans la silice (Cf: K. Buchwald "Fused Silica Transmission Gratings", Ibsen Photonics).

Avantageusement, le dispositif selon l'invention pourra être appliqué à la réalisation d'amplificateurs d'impulsions ultra brèves utilisant le principe d'extension/compression. Dans ces systèmes, afin de contourner les limitations de puissance optique instantanée dans les amplificateurs, l'impulsion lumineuse est d'abord étendue temporellement par un dispositif à dispersion du second ordre de signe donné, puis amplifiée et finalement re-compressée par un dispositif à dispersion du second ordre de signe opposé à la première.

Par ailleurs, une autre application pourra être envisagée concernant les dispositifs de dispersion programmable à base de diffraction acousto-optique. Ces dispositifs sont réalisés dans un matériau, tel que la Paratellurite, dont la dispersion propre se rajoute à la dispersion programmée produite par l'interaction acousto-optique. L'adjonction d'un dispositif selon l'invention permettra de compenser totalement ou partiellement cette dispersion propre, ce qui permet d'étendre l'utilisation du dispositif à des largeurs de bande supérieures.

Un mode de mise en oeuvre du procédé selon l'invention sera décrit ci-après, à titre d'exemple non limitatif, avec référence aux dessins annexés dans lesquels :

La figure 1 est une représentation schématique d'une configuration de deux prismes en géométrie dite tête-bêche ;

La figure 2 est une représentation schématique d'une configuration de deux réseaux parallèles fonctionnant en transmission;

La figure 3 est une représentation schématique d'un réseau utilisant une diffraction de surface ;

La figure 4, est une représentation schématique d'un réseau utilisant une diffraction de volume ;

La figure 5 est une représentation schématique d'une structure du dispositif selon l'invention pour la compensation de la dispersion temporelle appliquée à la génération d'impulsions lumineuses ultra brèves ;

La figure 6 est une première représentation schématique de la variation du temps de retard normalisé en fonction de la fréquence optique ;

La figure 7 est une représentation schématique de la variation du temps de retard selon la figure 6 à laquelle une fonction linéaire a été retranchée ;

La figure 8 est une première représentation schématique des courbes de dispersion d'un cristal de Paratellurite et du dispositif selon l'invention ;

La figure 9 est une première représentation schématique de l'addition de la courbe de dispersion d'un cristal de Paratellurite et de celle d'un dispositif selon l'invention ;

La figure 10 est une seconde représentation schématique des courbes de dispersion d'un étireur à fibre de silice et du dispositif selon l'invention ; et

La figure 11 est une seconde représentation schématique de l'addition de la courbe de dispersion d'un étireur à fibre de silice et de celle d'un dispositif selon l'invention.

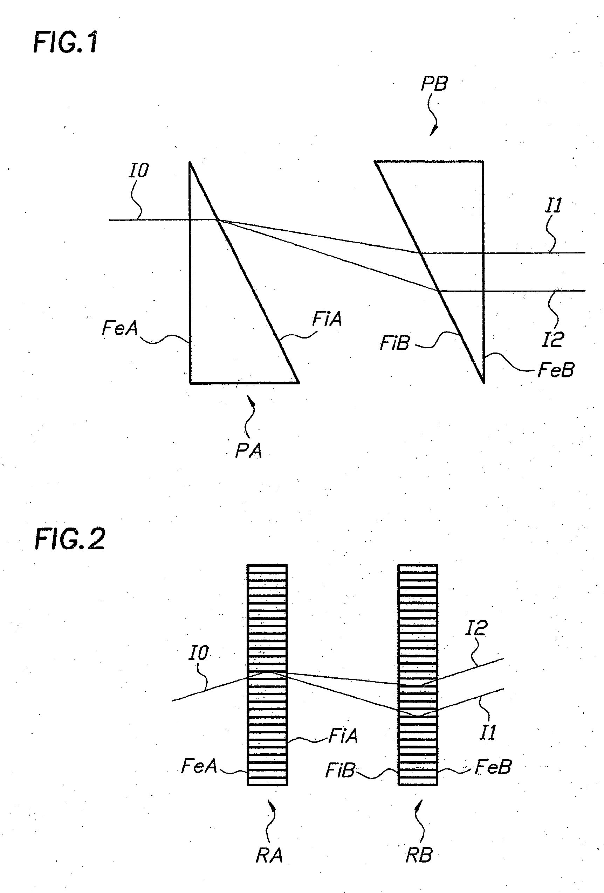

Dans l'exemple représenté sur la figure 1, la représentation schématique d'une configuration de deux prismes PA, PB, en géométrie dite tête-bêche montre que chaque face de l'un des prismes est parallèle à la face correspondante de l'autre prisme; ainsi, la face intérieure FiA du prisme PA est parallèle à la face intérieure FiB du prisme PB ; de même, la face extérieure FeA du prisme PA est parallèle à la face extérieure FeB du prisme PB.

Si un faisceau optique $I_0$ pénètre perpendiculairement à la face extérieure FeA du prisme PA, il ressort par la face intérieure FiA du prisme PA avec un angle dépendant de la longueur d'onde du faisceau $I_0$ ; ce faisceau pénètre ensuite par la face intérieure FiB du prisme PB, puis ressort selon $I_1$, $I_2$, par la face extérieure FeB du prisme PB selon une direction parallèle à la direction du faisceau optique $I_0$. Le chemin optique parcouru par le faisceau optique est dépendant de la longueur d'onde; ainsi, les deux faisceaux optiques $I_1$, $I_2$, correspondent respectivement aux trajets optiques $t_1$, $t_2$ parcourus par les longueurs d'onde respectivement $\lambda_1$, $\lambda_2$. Ceci conduit à une dispersion négative, le chemin optique croissant avec la longueur d'onde. Une telle configuration est connue dans l'état de l'art comme étant un compresseur à prismes. Le calcul des chemins optiques conduit à une dispersion du $3^{ième}$ ordre négative, laquelle ne peut être annulée par le choix de paramètres géométriques.

Dans l'exemple représenté sur la figure 2, la représentation schématique d'une configuration de deux réseaux parallèles fonctionnant en transmission montre que les faces extérieures et intérieures des réseaux RA, RB sont parallèles ; ainsi, la face intérieure FiA du réseau RA est parallèle à la face intérieure FiB du réseau RB ; de même, la face extérieure FeA du réseau RA est parallèle à la face extérieure FeB du réseau RB.

Si un faisceau optique $I_0$ pénètre par la face extérieure FeA du réseau RA, il ressort par la face intérieure FiA du prisme RA avec un angle dépendant de la longueur d'onde du faisceau $I_0$ ; ce faisceau pénètre ensuite par là face intérieure FiB du réseau RB, puis ressort selon $I_1$, $I_2$, par la face extérieure FeB du réseau RB selon une direction parallèle à la direction du faisceau optique $I_0$. Le chemin optique parcouru par le faisceau optique est dépendant de la longueur d'onde ; ainsi, les deux faisceaux optiques $I_1$, $I_2$ correspondent respectivement aux trajets optiques $t_1$, $t_2$ parcourus par les longueurs d'onde respectivement $\lambda_1$, $\lambda_2$. Ceci conduit à une dispersion du $2^{ième}$ ordre négative, et à une dispersion intrinsèque du $3^{ième}$ ordre positive. Une telle configuration est connue dans l'état de l'art comme étant un compresseur à réseaux.

Les réseaux en transmission, décrits précédemment, sont essentiellement de deux types : les réseaux dits par diffraction de surface et les réseaux dits par diffraction de volume.

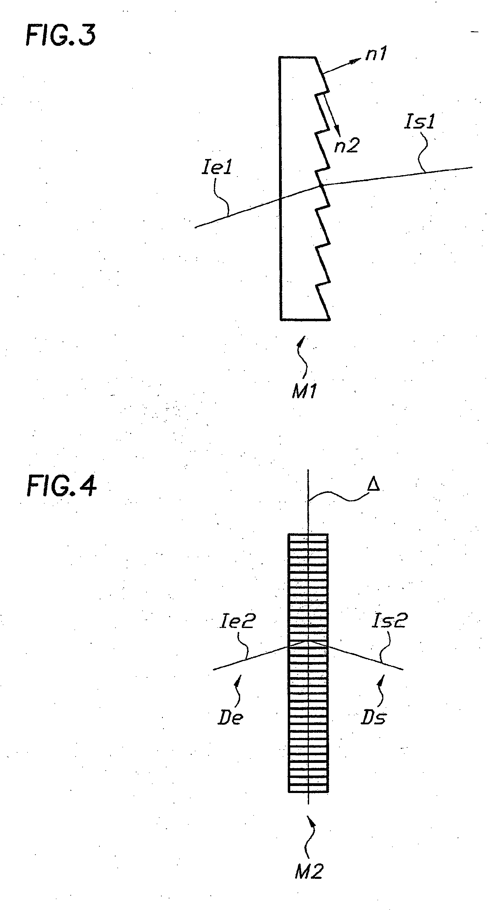

Dans l'exemple représenté sur la figure 3, la représentation schématique d'un réseau utilisant une diffraction de surface montre un matériau transparent M1 comprenant une face d'entrée plane Fe1 et une face de sortie Fs1 comportant une succession de paires de deux facettes dont les normales sont respectivement n1, n2 ; chaque paire de facettes comprend ainsi deux facettes de surface différente, les susdites normales n1, n2, étant de direction différente; ce type de réseau, connu dans l'état de l'art, est dit réseau à facettes.

Si un faisceau optique Ie1 pénètre obliquement sur la face d'entrée Fe1, il ressort par la face de sortie Fs1 avec un angle dépendant de la longueur d'onde du faisceau Ie1 ; l'efficacité de diffraction est augmentée si pour un faisceau optique incident Ie1 donné, le faisceau diffracté Is1 est parallèle à la normale de la facette ayant la surface la plus grande. Néanmoins, si cette condition est satisfaite, il apparaît une perte d'énergie importante correspondant aux ordres de diffraction ne satisfaisant pas cette condition.

Dans l'exemple représenté sur la figure 4, la représentation schématique d'un réseau utilisant une diffraction de volume montre un matériau transparent M2 d'épaisseur h comprenant une face d'entrée plane Fe2 et une face de sortie plane Fs2, les deux faces Fe2, Fs2, étant parallèles.

Le matériau transparent M2 comprend une variation période d'indice optique selon la direction d'un axe $\Delta$ parallèle aux deux faces Fe2, Fs2.

Pour un rapport entre l'épaisseur h et la longueur d'onde optique suffisamment élevé, une diffraction de Bragg peut être observée, c'est-à-dire que l'énergie transmise est principalement contenue dans un faisceau de sortie Is2 de direction Ds approximativement symétrique par rapport à l'axe $\Delta$ d'une direction De du faisceau d'entrée Ie2 ; les autres ordres de diffraction sont beaucoup plus faibles ; néanmoins, les efficacités de diffraction sont plus élevées que pour les réseaux à facettes.

Ainsi, pour une longueur d'onde centrale donnée, l'angle d'incidence est fixé par la condition de Bragg pour les réseaux de diffraction ; un compromis est donc recherché entre l'amélioration de l'efficacité et la diminution de la bande spectrale lorsque l'on augmente l'épaisseur h.

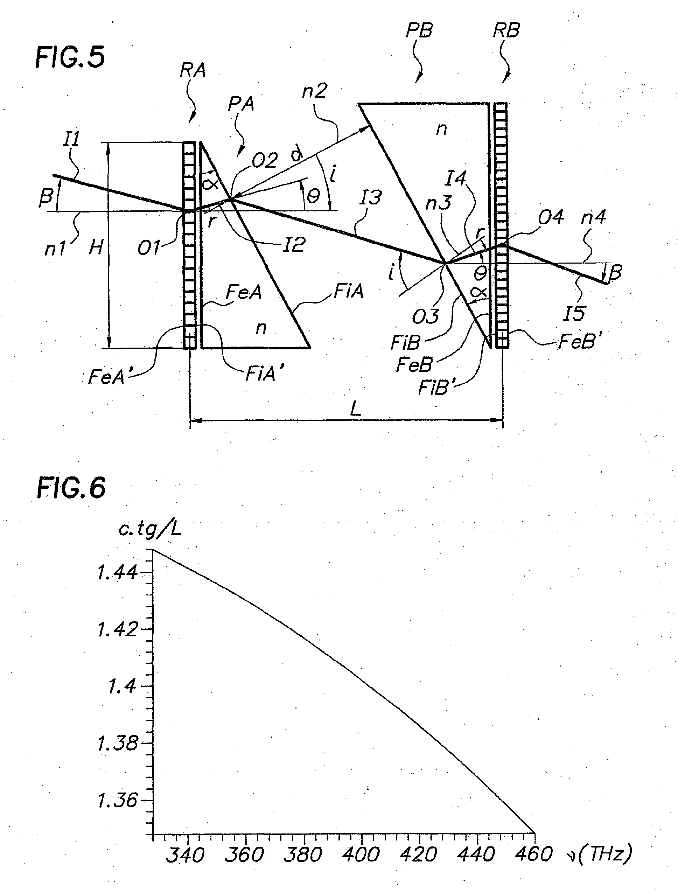

Dans l'exemple représenté sur la figure 5, la représentation schématique d'une structure du dispositif selon l'invention pour la compensation de la dispersion temporelle appliquée à la génération d'impulsions lumineuses ultra brèves montre une configuration de deux prismes PA, PB, en géométrie dite tête-bêche comprenant au voisinage de leurs faces extérieures, respectivement FeA, FeB, deux réseaux par diffraction de volume, respectivement RA proche de la face extérieure FeA du prisme PA, et RB proche de la face extérieure FeB du prisme PB. Les faces extérieures FeA, FeB, respectivement des prismes PA, PB sont parallèles aux faces internes FiA', FiB', respectivement des réseaux RA, RB ; les faces externes FeA', FeB', respectivement des réseaux RA, RB, sont parallèles aux faces internes FiA', FiB' desdits réseaux RA, RB.

Les susdites faces internes FiA', FiB', respectivement des réseaux RA, RB, sont suffisamment proches des susdites faces externes FeA, FeB, respectivement des prismes PA, PB, pour que le prisme PA soit considéré comme étant solidaire du réseau RA, et que le prisme PB soit considéré comme étant solidaire du réseau RB.

Les deux réseaux RA, RB sont identiques et comprennent $\sigma$ traits/mm ; ils sont distants d'une longueur L.

Les deux prismes PA, PB sont identiques, d'indice n, d'angle au sommet $\alpha$ et la distance entre leurs sommets, comptée parallèlement à la surface des réseaux, est H.

La distance entre les deux faces internes FiA, FiB, respectivement des prismes PA, PB, est définie par d.

Un faisceau optique incident $I_1$ pénètre dans le réseau RA en un point $O_1$ sous une incidence $\beta$ par rapport à la normale $n_1$ au réseau RA.

L'indice optique n des prismes PA, PB, est choisi de telle manière que l'ordre 0, non diffracté, soit totalement réfléchi par la face inclinée FiA du prisme PA. Cette condition s'écrit :

$$n.\sin\left[\alpha + \arcsin\left(\sin\beta/n\right)\right] > 1$$

L'ordre 1 est diffracté sous un angle $\theta$ positif vers le sommet du prisme PA, représenté par le faisceau optique $I_2$, lequel est réfracté, représenté par le faisceau $I_3$, par la face inclinée PiA du prisme PA en un point $O_2$, sous un angle i, tel que :

$$\sin i = n.\sin r,$$

l'angle $r = (\theta - \alpha)$ étant l'angle que fait le faisceau diffracté $I_3$ avec la normale $n_2$ à la face PiA.

La distance d entre les deux faces internes FiA, FiB, respectivement des prismes PA, PB, est :

$$d = (L.\cos\alpha - H.\sin\alpha)$$

Le faisceau $I_3$ parcourt dans l'air une distance d / cosi, pour aboutir au point $O_3$ sur la face interne FiB du prisme PB, puis est réfracté par le prisme PB, représenté par le faisceau $I_4$, sous l'angle r, puis aboutit en un point $O_4$ dans le réseau RB sous l'angle $\theta$, pour être diffracté, représenté par le faisceau $I_5$, parallèlement au faisceau incident $I_1$, sous l'angle $\beta$ par rapport à la normale $n_4$ au réseau RB.

La vitesse de la lumière dans le vide étant c et N étant l'indice optique de groupe des prismes, le temps de retard de groupe $t_g$ introduit par le dispositif entre un plan d'onde d'entrée passant par le sommet du premier prisme PA et un plan d'onde de sortie passant par le sommet du second prisme PB est donné par :

$$c.t_g = d/\cos i + [N(\tan\theta - \tan r) + \sin\beta/\cos\theta].[L\sin\theta + H\cos\theta + d\sin(i-r)/\cos i]$$

L'angle d'incidence $\beta$ et l'angle de diffraction $\theta$ sont reliés par la formule de diffraction des réseaux :

$$\sin\beta + n\sin\theta = 0{,}3\ \sigma\ /\ \nu,$$

$\nu$ étant la fréquence optique exprimée en THz.

Pour optimiser le rendement des réseaux dans la bande de fréquence envisagée, l'angle $\beta$ est tel que :

$$\sin\beta = n\sin\theta_0 = 0{,}15\sigma\ /\ \nu_0,$$

qui est la condition de Bragg pour ce type de réseau, $\theta_0$ étant l'angle de diffraction de l'ordre 1, dans les prismes, pour la longueur d'onde optique centrale $\lambda_0$ de fréquence optique $\nu_0$.

Compte tenu de cette optimisation, le système d'équation suivant :

$$n\ .\ \sin\left(\alpha + \theta_0\right) > 1$$

$$\sin\theta = 0{,}3\ \sigma\ (1/\nu - 1/2\nu_0)\ /\ n$$

$$r = \theta - \alpha$$

6

$$\sin i = n \cdot \sin r$$

$$d = L \left( \cos \alpha - h \sin \alpha \right)$$

associé à l'expression du temps de retard de groupe $c.t_g$, permet de tracer le temps de retard tg en fonction de $\nu$ pour un verre d'indices n et N donnés et les paramètres : $\alpha$, $\sigma$, $\nu_0$, L et h choisis.

A titre de premier exemple de dispositif de compensation à très large bande, selon l'invention, on cherche à compenser la dispersion temporelle d'un cristal de $TeO_2$ de 45 mm de longueur qui constitue la tête acousto-optique d'un filtre AOPDF (Acousto-Optique Programmable Dispersive Filter) dans une bande de 250 nm autour de la fréquence optique $\nu_0$ de 375 THz ($\lambda_0 = 0,8$ $\mu$m).

Pour cela, on choisit une paire de Grisms dont les réseaux ont $\sigma$ = 315 traits/mm et des prismes de verre SF 57 d'angle au sommet $\alpha$ = 33,5 °.

Dans ces conditions, $\beta$ et $\theta_0$ valent respectivement 7,24° et 3,96°.

Dans l'exemple représenté sur la figure 6, la courbe de la variation du temps de retard normalisé $c.t_g/L$ en fonction de la fréquence optique $\nu$, comprise entre 330 et 460 THz, pour h = H / L = 0,85, soit entre les longueurs d'onde $\lambda$ = 650 nm et $\lambda$ = 900 nm (soit 250 nm autour de 0,8 $\mu$m), montre une variation monotone du temps de retard normalisé entre 1,45 et 1,35 pour les fréquences optiques respectivement de 330 THz et 460 THz.

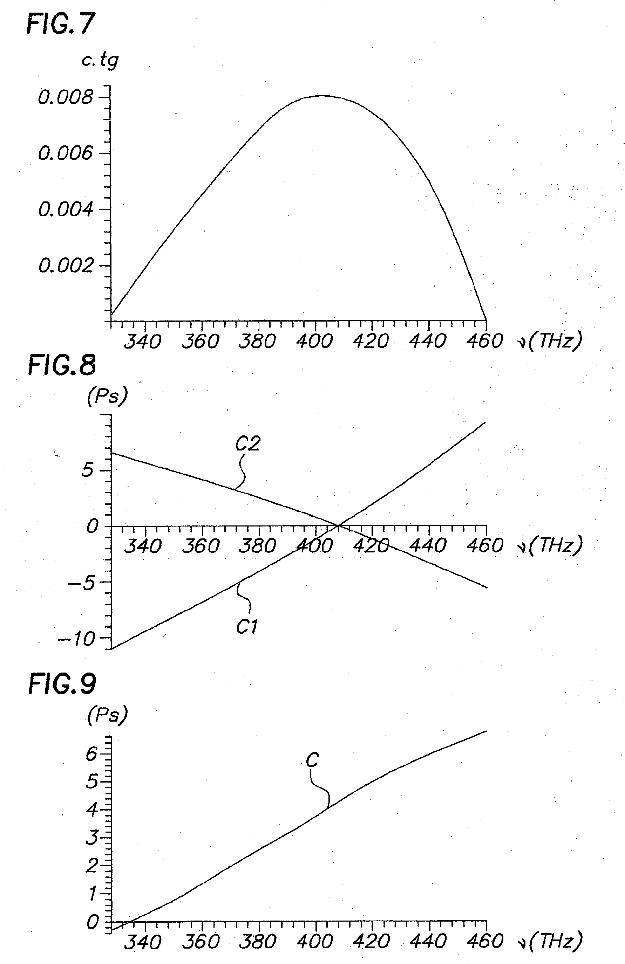

Dans l'exemple représenté sur la figure 7, une fonction purement linéaire est retranchée au temps de retard selon la figure 6. La courbe qui en résulte montre que la dispersion du 3$^{ième}$ ordre résiduelle est négative.

Dans l'exemple représenté sur la figure 8, la représentation schématique des courbes de dispersion d'un cristal de Paratellurite et d'un dispositif selon l'invention montre deux courbes, $C_1$, $C_2$, respectivement la dispersion positive d'un cristal de Paratellurite de 45 mm de longueur, et la dispersion négative d'un dispositif selon l'invention dont la distance entre les réseaux RA, RB est de L = 42 mm, en fonction de la fréquence optique $\nu$, comprise entre 330 et 460 THz.

Dans l'exemple représenté sur la figure 9, la représentation schématique de l'addition de la courbe de dispersion d'un cristal de Paratellurite et de celle d'un dispositif selon l'invention montre, à un temps de retard constant près, une courbe C en fonction de la fréquence optique $\nu$, comprise entre 330 et 460 THz, pour un cristal de Paratellurite de 45 mm de longueur et une distance de 42 mm entre les réseaux RA, RB.

Le temps de retard résiduel, quasi linéaire de 6 ps, en fonction de la fréquence optique, soit la moitié de la capacité de programmation de 12 ps du dispositif AOPDF, est destiné à être compensé par la programmation de la diffraction acousto-optique afin d'optimiser le rendement de cette diffraction.

Ainsi, la durée d'une impulsion lumineuse à très large bande peut être contrôlée entre moins de 10 fs et 6 ps.

A titre de deuxième exemple de dispositif de compensation de la dispersion temporelle selon l'invention, on cherche à compenser la dispersion temporelle de 80 ps introduite par un étireur à fibre de silice de 7,5 m de longueur dans une bande de 100 nm autour de $\lambda_0$ = 0,8 $\mu$m. A cet effet, on choisit une paire de Grisms dont les réseaux ont $\sigma$ = 1200 traits/mm et des prismes de verre SF 57 d'angle au sommet $\alpha$ = 42,5°.

Dans ces conditions, $\beta$ et $\theta_0$ valent respectivement 28,7° et 15,26°.

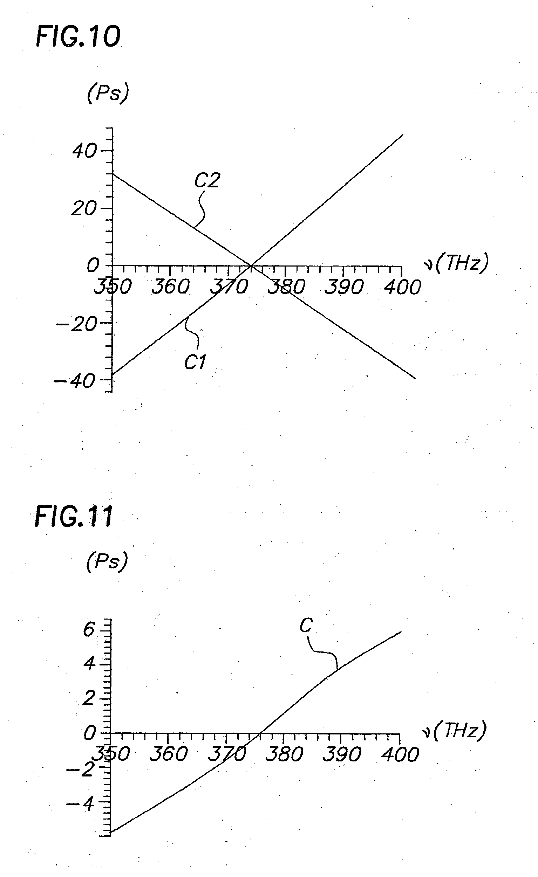

Dans l'exemple représenté sur la figure 10, la représentation des courbes de dispersion d'une fibre de silice de 7,5 m et d'un dispositif selon l'invention, de distance L = 14 cm entre les réseaux, montre deux courbes C1, C2, respectivement la dispersion positive de la fibre et la dispersion négative du dispositif selon l'invention en fonction de la fréquence optique $\nu$, comprise entre 350 THz et 400 THz.

Dans l'exemple représenté sur la figure 11, la représentation schématique de l'addition des courbes de dispersion de la fibre et du dispositif selon l'invention montre, à un temps de retard constant près, une courbe C en fonction de la fréquence optique $\nu$, comprise entre 3 50 THz et 400 THz, pour une fibre de silice de 7,5 m de longueur et une distance de 42 mm entre les réseaux RA, RB.

Le temps de retard résiduel quasi linéaire de 12 ps, en fonction de la fréquence optique, est destiné à être compensé par la programmation de la diffraction acousto-optique afin d'optimiser le rendement de cette diffraction.

Ainsi, une impulsion lumineuse de moins de 20 fs et de grande énergie, peut être générée par des lasers fonctionnant sur le principe de l'extension/compression.

Dans le cas des compresseurs décrits précédemment, le déplacement latéral des susdits trajets optiques $t_1$, $t_2$, parcourus par les longueurs d'onde respectivement $\lambda_1$, $\lambda_2$, correspondant respectivement aux susdits faisceaux optiques $I_1$, $I_2$, peut être non compatible avec l'utilisation prévue du susdit faisceau optique $I_0$.

Avantageusement, dans l'état de l'art, par réflexion sur un dispositif adéquat, un retour inverse à travers la structure du dispositif selon l'invention permettra de doubler les effets de dispersion et de retrouver la géométrie initiale du faisceau optique.

Avantageusement, un deuxième dispositif selon l'invention, orienté de 180° par rapport au premier, permettra de doubler les effets de dispersion et de retrouver la géométrie initiale du faisceau optique.

Avantageusement, l'intégration d'un réseau et d'un prisme dans un dispositif GRISM ne sera pas nécessaire, mais au contraire permettra leur utilisation comme éléments séparés et par voie de conséquence l'introduction d'une flexibilité dans les éléments de conception.

**Revendications**

1. Dispositif pour la compensation de la dispersion temporelle appliquée à la génération d'impulsions lumineuses ultra brèves comprenant deux réseaux de diffraction optiques (RA, RB), identiques et parallèles et deux prismes (PA, PB) identiques placés à l'intérieur des susdits réseaux de diffraction optiques (RA, RB),
**caractérisé en ce que** les susdits réseaux de diffraction optiques (RA, RB) sont <u>des réseaux de fentes ou</u> des réseaux de phase en volume fonctionnant en transmission sur le principe de la diffraction de Bragg, les faces extérieures (FeA, FeB) des susdits prismes (PA, PB) étant parallèles aux susdits réseaux de diffraction optiques (RA, RB), et les faces intérieures (FiA, FiB) des susdits prismes (PA, PB) étant parallèles entre elles.

2. Dispositif selon la revendication 1,
**caractérisé en ce que** l'angle d'incidence ($\beta$) sur les susdits réseaux de diffraction optiques (RA, RB), et l'angle de diffraction ($\theta$) de l'ordre 1 dans les susdits prismes (PA, PB), à la longueur d'onde centrale ($\lambda_0$), répondent à la condition de Bragg pour ce type de réseaux de diffraction optiques (RA, RB).

3. Dispositif selon la revendication 1 ou 2,
**caractérisé en ce que** l'ordre 0 non diffracté par les susdits réseaux de diffraction optiques (RA, RB) est totalement réfléchi par les susdites faces intérieures (FiA, FiB) des susdits prismes (PA, PB).

4. Dispositif selon l'une des revendications 1 à 3,
**caractérisé en ce qu'**il introduit un temps de retard de groupe ($t_g$) qui présente un point d'inflexion en fonction de la fréquence optique ($v$) au-delà duquel, pour une fréquence optique supérieure ($v$) à celle du susdit point d'inflexion, le 3$^{ième}$ ordre de la phase optique ($\varphi$) en fonction de la fréquence optique ($v$) est négatif.

5. Dispositif,
**caractérisé en ce qu'**il comprend un premier et un second dispositifs selon l'une des revendications 1 à 4, le deuxième dispositif est orienté de 180° par rapport au premier, de sorte qu'il permet de doubler les effets de dispersion et de retrouver la géométrie initiale du faisceau optique.

6. Procédé pour compenser la dispersion temporelle d'un filtre acousto-optique programmable ou non,
**caractérisé en ce qu'**on utilise un dispositif selon l'une des revendications 1 à 5.

7. Procédé pour compresser des impulsions laser préalablement étirées par un filtre dispersif,
**caractérisé en ce qu'**on utilise un dispositif selon l'une des revendications 1 à 5.

**Patentansprüche**

1. Vorrichtung zur Kompensation der Zeitdispersion angewandt auf die Erzeugung ultrakurzer Lichtimpulse umfassend zwei identische und parallele optische Beugungsgitter (RA, RB) und zwei identische, innerhalb der optischen Beugungsgitter (RA, RB) angeordnete Prismen (PA, PB),
**dadurch gekennzeichnet, dass** die optischen Beugungsgitter (RA, RB) <u>Spaltgitter oder</u> Volumen-Phasengitter sind, die nach dem Braggschen Dispersionsprinzip übertragen, wobei die Außenflächen (FeA, FeB) der Prismen (PA, PB) parallel zu den optischen Beugungsgittern (RA, RB) sind und die Innenflächen (FiA, FiB) der Prismen (PA, PB) parallel zueinander sind.

2. Vorrichtung nach Anspruch 2,
**dadurch gekennzeichnet, dass** der Einfallswinkel ($\beta$) auf die optischen Beugungsgitter (RA, RB) und der Beu-gungswinkel ($\theta$) erster Ordnung in den Prismen (PA, PB) bei einer Mittenlängenwelle ($\lambda_0$) den Braggschen Bedin-gungen für diese Art von optischen Beugungsgittern (RA, RB) entsprechen

3. Vorrichtung nach Anspruch 1 oder 2,

**dadurch gekennzeichnet dass** die von den optischen Beugungsgittern (RA, RB) nicht gebeugte 0. Ordnung von den Innenflächen (FiA, FiB) der Prismen (PA, PB) vollständig reflektiert werden.

4. Vorrichtung nach einem der Ansprüche 1 bis 3,
**dadurch gekennzeichnet, dass** sie eine Gruppenverzögerungszeit (tg) einführt, die einen von der optischen Frequenz (v) abhängigen Wendepunkt aufweist, ab welchem, bei einer optischen Frequenz (v), die grösser ist als die des Wendepunkts, die 3. Ordnung der optischen Phase (φ) in Abhängigkeit der optischen Frequenz (v) negativ ist.

5. Vorrichtung,
**dadurch gekennzeichnet, dass** sie eine erste und eine zweite Vorrichtung nach einem der Ansprüche 1 bis 4 aufweist, wobei die zweite Vorrichtung um 180° relativ zur ersten Vorrichtung ausgerichtet ist, so dass sie eine Verdoppelung der Dispersionseffekte und eine Rückkehr zur ursprünglichen Geometrie des optischen Strahls erlaubt.

6. Verfahren zur Kompensation der zeitlichen Dispersion eines programmierbaren oder nicht programmierbaren akustisch-optischen Filters, **dadurch gekennzeichnet, dass** eine Vorrichtung nach einem der Ansprüche 1 bis 5 verwendet wird.

7. Vorrichtung zur Komprimierung von zuvor durch einen Dispersionsfilter gedehnten Laserimpulsen,
**dadurch gekennzeichnet, dass** eine Vorrichtung nach einem der Ansprüche 1 bis 5 verwendet wird.

**Claims**

1. A device for the compensation of the time dispersion applied to the generation of ultra short light pulses comprising two identical and parallel optical diffraction gratins (RA, RB) and two identical prisms (PA, PB) placed inside the aforesaid optical diffraction gratings (RA, RB),
**characterized in that** the aforesaid optical diffraction gratings (RA, RB) are gratings with slits or volume phase gratings operating in transmission on the Bragg diffraction principle, the outer faces (FeA, FeB) of the aforesaid prisms (PA, PB) being parallel to the aforesaid optical diffraction gratings (RA, RB), and the inner faces (FiA, FiB) of the aforesaid prisms (PA, PB) being parallel with each other.

2. The device according to claim 1,
**characterized in that** the angle of incidence ($\beta$) on the aforesaid optical diffraction gratings (RA, RB), and the diffraction angle ($\theta$) of order 1 in the aforesaid prisms (PA, PB) at the central wavelength ($\lambda_0$), meet Bragg's condition for this type of optical diffraction gratings (RA, RB).

3. The device according to claim 1 or 2,
**characterized in that** the order 0 not diffracted by the aforesaid optical diffraction gratings (RA, RB) is totally reflected by the aforesaid inner faces (FiA, FiB) of the aforesaid prisms (PA, PB).

4. The device according to one of claims 1 to 3,
**characterized in that** it introduces a group delay time (tg) which has an inflection point as a function of the optical frequency (v) beyond which, for an optical frequency (v) higher than that of the aforesaid inflection point, the 3$^{\mathrm{rd}}$ order of the optical phase ($\phi$) as a function of the optical frequency (v) is negative.

5. A device,
**characterized in that** it comprises first and second devices according to one of claims 1 to 4, the second device is oriented by 180° relatively to the first, so that the dispersion effects may be doubled and the initial geometry of the optical beam may again be found.

6. A method for compensation for the time dispersion of an acousto-optical filter, either programmable or not,
**characterized in that** a device according to one of claims 1 to 5 is used.

7. A method for compressing laser pulses stretched out beforehand with a dispersive filter,
**characterized in that** a device according to one of claims 1 to 5 is used.

# FIG.1

# FIG.2

FIG.3

FIG.4

**FIG.5**

**FIG.6**

FIG.7

FIG.8

FIG.9

FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **E.B. TREACY.** Optical Pulse Compression with Diffraction Gratings. *IEEE J. Quantum Electron.,* Septembre 1969, vol. 5 (9), 454-458
- **A.M. WEINER.** Femtosecond pulse shaping using spatial light modulators. *Rev. Sci ; Instrum.,* Mai 2000, vol. 71 (5), 1929-1960
- **P. TOURNOIS.** Acousto-optic programmable dispersive filter for adaptative compensation of group delay time dispersion in laser systems. *Optics Communications,* 1997, vol. 140, 245-249
- **P. TOURNOIS.** Sur un interféromètre de phase à variation linéaire du temps de retard en fonction de la fréquence. *C.R.Acad.Sc.Paris,* Septembre 1969, vol. 269, 455-458
- **E.A. GIBSON et al.** Efficient reflection grisms for pulse compression and dispersion compensation of femtosecond pulsés. *Optics Letters,* Novembre 2006, vol. 31 (22), 3363-3365
- **F. TRAVELLA et al.** Dispersion management for sub-10 fs, 10 TW optical parametric chirped-pulse amplifier. *Optics Letters,* Août 2007, vol. 32 (15), 2227-2229
- **J. ZHENG ; H. ZACHARIAS.** Design considérations for a compact grism stretcher for non-collinear optical parametric chirped-pulse amplification. *Appl.Phys.B*
- **S. BARDEN et al.** Volume-Phase Holographie Gratings and the Efficiency of Three Simple Volume-Phase Holographic Gratings. *PASP,* Juin 2000, vol. 112, 809-820
- **K. BUCHWALD.** Fused Silica Transmission Gratings. *Ibsen Photonics*